(19) **Europäisches Patentamt**

**European Patent Office**

**Office européen des brevets**

(11) Veröffentlichungsnummer: **0 033 525**
**B1**

(12) **EUROPÄISCHE PATENTSCHRIFT**

(45) Veröffentlichungstag der Patentschrift:
**01.06.88**

(21) Anmeldenummer: **81100675.8**

(22) Anmeldetag: **30.01.81**

(51) Int. Cl.⁴: **G 01 K 13/00,** G 01 K 1/16,
G 01 W 1/14, G 08 B 19/02

(54) **Temperaturanzeigevorrichtung an Verkehrsflächen.**

(30) Priorität: **31.01.80 DE 3003408**

(43) Veröffentlichungstag der Anmeldung:
**12.08.81 Patentblatt 81/32**

(45) Bekanntmachung des Hinweises auf die Patenterteilung:
**01.06.88 Patentblatt 88/22**

(84) Benannte Vertragsstaaten:
**AT BE CH FR GB IT LI LU NL SE**

(56) Entgegenhaltungen:
**BE - A - 546 520**
**CH - A - 563 045**
**DE - A - 2 619 285**
**DE - A - 2 634 579**
**DE - A - 2 940 205**
**FR - A - 2 174 946**
**FR - A - 2 188 223**
**GB - A - 1 103 705**
**US - A - 4 019 368**

(73) Patentinhaber: **Weiler, Wolfgang, Am Römerbrunnen 21,
D-6000 Frankfurt am Main 56 (DE)**

(72) Erfinder: **Weiler, Wolfgang, Am Römerbrunnen 21,
D-6000 Frankfurt am Main 56 (DE)**

(74) Vertreter: **Keil, Rainer A., Dipl.-Phys. Dr. et al, KEIL &
SCHAAFHAUSEN Patentanwälte Eysseneckstrasse 31,
D-6000 Frankfurt am Main 1 (DE)**

## Beschreibung

Die Erfindung betrifft eine Vorrichtung an einer Verkehrsfläche mit einem erhöht und am Rande der Verkehrsfläche angeordneten Anzeigeorgan zur weit sichtbaren Anzeige der Temperatur der Belagoberfläche oder der obersten Belagschicht, welche durch Verwendung einer Substanz, die bei Überschreiten eines Temperaturschwellenwertes von einem optisch wahrnehmbaren Zustand in einen anderen solchen Zustand übergeht, die Temperatur in der Umgebung des Schmelzpunktes des Wassers in der Weise anzeigt, dass erkennbar ist, ob die Temperatur oberhalb oder unterhalb des Temperaturschwellenwertes liegt.

Eine derartige Vorrichtung ist aus der GB-PS-1 103 705 bekannt. Bei dieser Vorrichtung wird zur Anzeige eines Temperaturwechsels eine Flüssigkeit verwendet, die aufgrund eines Wechsels von nicht-ionisierten in den ionisierten Zustand eine Farbänderung in der Nähe des Nullpunktes darstellen soll. Für den Einsatz in Eiswarneinrichtungen sind solche brauchbaren Flüssigkeiten aber nicht bekannt. Die Verwendung von Flüssigkeit hat auch noch den Nachteil, dass diese verdunstet, insbesondere wenn, wie bei der bekannten Vorrichtung vorgeschlagen, Kohlenstofftetrachlorid oder Alkohol als Lösungsmittel eingesetzt werden soll. Ausserdem besteht bei der bekannten Vorrichtung die Gefahr, dass durch hochgeschleuderten Splitt die Glasabdeckung zerstört und die Flüssigkeit auslaufen kann. Bei Lösungen, die durch Farbumschlag eine Temperaturänderung anzeigen sollen, wäre ferner eine erhebliche Schichtdicke und daher ein erhebliches Flüssigkeitsvolumen erforderlich. Bei der bekannten Vorrichtung wird ausserdem die Temperatur lediglich in der Höhe der Anzeigescheibe überwacht. Damit diese aber von einem Autofahrer mit Sicherheit gesehen werden kann, muss sie in einem ausreichenden Abstand oberhalb der Strassenoberfläche angeordnet sein. Da die Lufttemperatur aber häufig erheblich von der Temperatur des Bodens und des angrenzenden Fahrbahnbelages abweicht, kann diese bekannte Vorrichtung nicht die Aufgabe einer zuverlässigen Eiswarnvorrichtung erfüllen.

Der Erfindung liegt daher die Aufgabe zugrunde, eine Vorrichtung der eingangs genannten Art in einfacher und damit kostengünstiger Bauart zu schaffen, die ohne bewegliche Teile die Temperatur der Belagoberfläche oder Belagschicht zuverlässig hinsichtlich des Überschreitens eines Schwellenwertes anzeigt.

Diese Aufgabe wird erfindungsgemäss dadurch gelöst, dass als Anzeigeorgan ein Flüssigkeitskristallorgan vorgesehen ist, welches durch einen Wärmeleiter mit dem Messort auf der Belagoberfläche oder in der obersten Belagschicht verbunden ist. Diese Vorrichtung arbeitet durch die Verbindung des Messortes mit der Temperaturanzeige über einen Wärmeleiter energieautark. Damit ist eine kostengünstige Aufstellung im Strassennetz möglich. Flüssigkeitskristalle können in ausserordentlich dünner Schicht schon in erforderliche Temperaturanzeige liefern. Damit ist auch ein geringer Materialverbrauch bei geringer Anzeigeträgheit gewährleistet und die Gefahr einer die Temperaturanzeige beeinträchtigenden Beschädigung durch hochgeschleuderten Splitt weitgehend vermieden. Die Vorrichtung hat trotz der Überwachung der Temperatur an der gewünschten Stelle, nämlich der Belagoberfläche oder der Belagschicht, keinerlei beweglichen Teile und ist damit weitgehend wartungsfrei.

Flüssigkeitskristallorgane zur Anzeige eines Temperaturumschlages sind bereits bekannt. So wird in der US-A-4 019 368 ein bildartiges Raumthermometer beschrieben, bei dem farbige Flächen des Bildes bei Überschreiten bestimmter Temperaturen einen Farbumschlag durchführen. Zur Bestimmung der exakten Temperatur ist jedoch ein herkömmliches Zimmerthermometer vorgesehen. Eine Verwendung im Sinne der vorliegenden Erfindung als Vorrichtung an einer Verkehrsfläche zur Anzeige der Temperatur der Belagoberfläche ist mit dem durch die Raumtemperatur in seiner Farbgestaltung veränderbaren Bild nicht möglich.

Auch die aus der DE-A-2 619 285 bekannte Flüssigkristallvorrichtung dient lediglich zur Anzeige der Umgebungstemperatur. Die in erster Linie als «Digital-Thermometer» gedachte Vorrichtung lässt sich durch eine zusätzliche Fluoreszensplatte auch zur Anzeige von Temperaturbereichen (Temperaturen grösser oder kleiner 0 °C) verwenden, sie gibt aber keine Anregung derart, als Anzeigeorgan ein Flüssigkeitskristallorgan vorzusehen, welches durch einen Wärmeleiter mit dem Messort auf oder in der Belagoberfläche verbunden ist.

Gleiches gilt für die CH-A-563 045, bei der als Vorrichtung zur frühzeitigen Ermittlung der Voraussetzungen zur Bildung von Frostglätte auf Strassenfahrbahnen ein Quecksilberkontaktthermometer als Anzeigeorgan vorgesehen ist, das Anzeigelampen für bestimmte Temperaturwerte aufweist.

Aus der DE-OS 2 634 579 ist ferner ein Frost- und Glatteis-Warngerät bekannt, das einen erheblichen konstruktiven Aufwand und wegen der verdunstenden Flüssigkeit eine dauernde Wartung erfordert. Bei diesem Warngerät soll das Absinken der Temperatur unter den Gefrierpunkt dadurch sichtbar gemacht werden, dass aufgrund der Ausdehnung gefrierenden Wassers eine zweite farbige Flüssigkeit soweit nach oben verschoben wird, dass sie in den Bereich eines Sichtfensters gelangt, was von aussen als Farbumschlag wahrgenommen wird. Die Substanz selbst geht nicht in einen optisch anderen Zustand über. Es erscheint technisch nicht realisierbar, eine derart grosse Menge einer zweiten Flüssigkeit durch eine erste gefrierende Flüssigkeit in einer Vorrichtung einer Verkehrsfläche soweit zu verschieben, dass dadurch ein als Anzeigeorgan dienendes Sichtfenster überstrichen wird, was so gross ist, dass es von einem Autofahrer noch in angemessenem Abstand wahrgenommen werden kann.

Die Erfindung wird nachfolgend anhand eines Ausführungsbeispiels näher erläutert, das in der Zeichnung dargestellt ist.

Es zeigen:
Fig. 1 einen Teillängsschnitt einer erfindungsgemässen Vorrichtung und
Fig. 2 in gleicher Schnittdarstellung einen vergrösserten Ausschnitt des in Fig. 1 gezeigten Anzeigepfahles im Bereich der Strassendecke.

Eine Anzeigepfahl 10 weist an seinem oberen Ende ein längs der Strasse zeigendes Anzeigeorgan 11 auf, das aus einem Flüssigkristall besteht. Der Flüssigkristall ist so zusammengesetzt, dass er den optisch wirksamen Kristallumschlag in der Nähe des Wassergefrierpunktes hat. Die anzuzeigende Temperatur soll die der Belagschicht 12 einer Strassendecke sein. Dazu befindet sich am Messort ein Temperaturfühler in Form einer thermisch gut leitenden Metallkörpers 13, der durch eine ebenfalls thermisch ebenfalls gut leitende Verbindung in Form eines Wärmeleiters 14, der beispielsweise aus Kupfer bestehen kann, mit dem Anzeigeorgan 11 verbunden ist. Um den als Temperaturfühler dienenden Metallkörper 13 und das Anzeigeorgan 11 auf derselben Temperatur zu halten, ist der Wärmeleiter 14 thermisch durch eine Wärmeisolation 15 isoliert. Der Wärmeleiter 14 ist aus Montagegründen am Aussenumfang des Anzeigepfahles 10 auftrennbar.

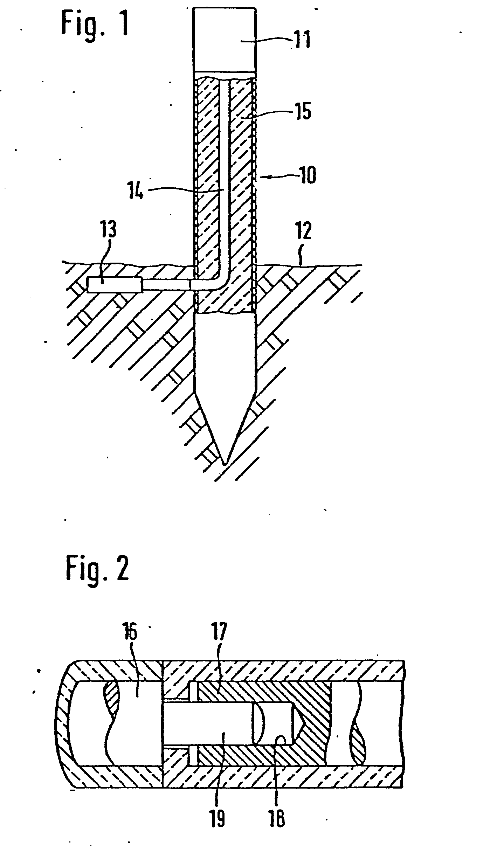

Die Wärmekupplung ist in Fig. 2 gezeigt. Dabei sind an der Verbindungsstelle zwei aus thermisch gut leitendem Werkstoff bestehende Stangen 16 und 17 in engem Wärmekontakt zusammengesteckt. Der Kontakt kann, wie nicht näher dargestellt, durch Federn verbessert werden. In dem dargestellten Ausführungsbeispiel weist das eine Ende der Stange 17 eine Bohrung 18 auf, in die von der Stange 16 her ein Zapfen 19 eng passend und mit gutem Wärmekontakt eindringt. Die zu diesen beiden Stangen 16 und 17 gehörenden Isolationsmäntel stossen fest und isolierend aneinander.

## Patentanspruch

1. Vorrichtung an einer Verkehrsfläche mit einem erhöht und am Rande der Verkehrsfläche angeordneten Anzeigeorgan zur weit sichtbaren Anzeige der Temperatur der Belagoberfläche oder der obersten Belagschicht, welche durch Verwendung einer Substanz, die bei Überschreiten eines Temperaturschwellenwertes von einem optisch wahrnehmbaren Zustand in einen anderen solchen Zustand übergeht, die Temperatur in der Umgebung des Schmelzpunktes des Wassers in der Weise anzeigt, dass erkennbar ist, ob die Temperatur oberhalb oder unterhalb des Temperaturschwellenwertes liegt, dadurch gekennzeichnet, dass als Anzeigeorgan (11) ein Flüssigkristallorgan vorgesehen ist, welches durch einen Wärmeleiter (14) mit dem Messort auf der Belagoberfläche oder in der obersten Belagschicht (12) verbunden ist.

## Claim

1. An apparatus located on a road surface, comprising an indicator means positioned at a location above the road surface and at the edge thereof, for optically indicating from afar the temperature of the surface layer or the uppermost coating layer, which – by using a medium changing when exceeding a temperature threshold value from one optically perceivable state over into another such state – indicates the temperature in the vicinity of the melting point of the water such that it is recognizable whether the temperature is above or below the temperature threshold value, characterized in that the indicator medium as used is a liquid crystal agent which, through a heat conductor (14), is in communication with the sensing point on the layer surface or in the uppermost coating layer (12).

## Revendication

1. Appareil disposé à surface routière, prévu d'un membre d'indication positionné à un lieu en amont et au bord de la surface routière pour l'indication optique du loin de la température du revêtement de surface ou de la couche supérieure du revêtement, appareil indicant en employant une substance se passant en atteignant une valeur seuil de température d'un état optiquement perceptible à un tel état différent, la température en entourage du point de fusion de l'eau de manière qu'il soit discernable si la température se trouve au-dessus ou au-dessous de la valeur seuil de température, caractérisé en ce que l'élément d'indication (11) est un milieu de cristal liquéfié en communication par l'intermédiaire d'un conducteur du calorique (14) avec le point à mesurer sur le revêtement de surface ou dans la couche de revêtement (12) supérieure.

**Fig. 1**

11

15

10

14

13

12

**Fig. 2**

16    17

19    18